Europäisches Patentamt

European Patent Office

Office européen des brevets

(11) Veröffentlichungsnummer: **0 199 969**
**B1**

# EUROPÄISCHE PATENTSCHRIFT

(45) Veröffentlichungstag der Patentschrift:
08.06.88

(21) Anmeldenummer: 86103763.8

(22) Anmeldetag: 19.03.86

(51) Int. Cl.⁴: **B 60 B 21/10**

(54) Felge für einen Fahrzeugluftreifen.

(30) Priorität: 27.04.85 DE 3515320

(43) Veröffentlichungstag der Anmeldung:
05.11.86 Patentblatt 86/45

(45) Bekanntmachung des Hinweises auf die Patenterteilung:
08.06.88 Patentblatt 88/23

(84) Benannte Vertragsstaaten:
AT BE CH DE FR GB IT LI LU NL SE

(56) Entgegenhaltungen:
DE-A-3 000 428
DE-A-3 331 870
US-A-4 169 496

(73) Patentinhaber: **Continental Aktiengesellschaft,
Königsworther Platz 1, D-3000 Hannover 1 (DE)**

(72) Erfinder: **Rach, Heinz- Dieter, Planetenring 32,
D-3008 Garbsen 1 (DE)**
Erfinder: **Frerichs, Udo, Buchenweg 7, D-3012
Langenhagen 8 (DE)**

EP 0 199 969 B1

## Beschreibung

Die Erfindung betrifft eine Felge für einen Fahrzeugluftreifen, der mit seinen Wülsten am radial inneren Umfang der Felge montierbar ist, mit einem Felgenkranz, der radial innen Sitzflächen für die Reifenwülste und an den seitlichen Rändern sich im wesentlichen nach radial innen erstreckende Felgenhörner aufweist, der weiterhin radial außen mit Stützflächen für einen Pannenlauf versehen ist.

Ein Fahrzeugrad mit einer solchen Felge wird z. B. in der DE-A-3 145 252 beschrieben. Ein ähnliches Fahrzeugrad ist aus der DE-A-3 244 046 bekannt. Die Felgen der beiden bekannten Fahrzeugräder unterscheiden sich im wesentlichen dadurch, daß beim erstgenannten am radial inneren Umfang eine Montagevertiefung (Hochbett) für den Reifen vorhanden ist, während das zweite aufgrund der exzentrischen Lagerung der Wulstkerne in den Reifenwülsten ohne ein Hochbett auskommt. Beiden bekannten Fahrzeugrädern ist gemeinsam, daß die Wand des Felgenkranzes, die auf der radial inneren Seite Sitzflächen für den Reifen bildet, auf der radial äußeren Seite als Stützfläche für den Reifen bei einem Pannenlauf dient.

Diese bekannte Gestaltung der Felge kann jedoch zu Nachteilen führen, wenn man Reifen mit immer niedrigeren Querschnitten verwendet, bei denen die Federwege kleiner werden. Es kann dann in extremen Situationen zu Durchschlägen kommen, die die Gefahr einer Schädigung des Felgenkranzes und damit der Sitzflächen für den Reifen in sich bergen. Weiterhin ist aufgrund der Starrheit und Unnachgiebigkeit des Felgenkranzes ein Pannenlauf in einem Umfang möglich, den man gerne noch nach oben hin ausdehnen möchte.

Der Erfindung liegt deshalb die Aufgabe zugrunde, eine Felge anzugeben, die die geschilderten Nachteile nicht aufweist und mit der insbesondere eine Verbesserung der Pannenlaufleistung erzielt wird.

Diese Aufgabe wird erfindungsgemäß dadurch gelöst, daß die Wandung des Felgenkranzes im Bereich eines jeden Felgenhorns nach radial außen gekrümmt fortgesetzt ist und dann mit radialem Abstand zum übrigen Felgenkranz nach axial innen zurückgebogen ist, so daß sie zwei Pannenlaufringe bildet.

Durch die erfindungsgemäße Ausgestaltung des Felgenkranzes im Bereich der Pannenlaufringe wird der Vorteil einer Federwirkung erzielt, so daß bei Durchschlägen im normalen Fahrbetrieb sowie beim Pannenlauf die Felge und der Reifen in seinem Zenitbereich wesentlich geringeren Beanspruchungen ausgesetzt sind. Dies hat bezüglich des Pannenlaufs zur Folge, daß wesentlich größere Entfernungen mit einem drucklosen Reifen zurückgelegt werden können, ohne daß es zu einer dauerhaften Schädigung des Reifens kommt. Ein weiterer Vorteil besteht darin, daß die Stützflächen auf den Pannenlaufringen von den Felgensitzflächen abgekoppelt sind, so daß selbst bei einer Schädigung der Stützflächen infolge von harten Durchschlägen ein sicherer Sitz der Reifenwülste auf der Felge gewährleistet bleibt. Außerdem wird aufgrund des vergrößerten radialen Abstandes zwischen Felgensitzfläche und Stützfläche der Reifen bei einem Pannenlauf weniger stark eingedrückt, so daß auch dies zu einer erhöhten Lebensdauer führt.

Durch die Gestaltung des Felgenkranzes, insbesondere im Bereich der gekrümmten Felgenhörner, wird die Eigensteifigkeit so stark vergrößert, daß man mit etwa zwei Dritteln der Wandstärke bekannter Felgenkränze auskommt. Dies hat zur Folge, daß trotz der Ausbildung der Pannenlaufringe sich insgesamt keine Gewichtserhöhung der erfindungsgemäßen Felge gegenüber bekannten Felgen ergibt. Somit erhält man bei unverändertem Gesamtgewicht des Fahrzeugrades insgesamt eine Fahrkomfortverbesserung, eine Erhöhung des Pannanlaufkomforts sowie eine Erhöhung der Pannenlaufleistung und der Lebensdauer von Reifen und Felge.

Vorteilhafte Ausgestaltungen der Erfindung sind den Unteransprüchen zu entnehmen.

Nachfolgend wird ein Ausführungsbeispiel der Erfindung anhand einer Zeichnung näher erläutert.

Es zeigt

Fig. 1　ein Fahrzeugrad mit einer Felge, bei der die Sitzflächen für die Reifenwülste einen etwa halbkreisförmigen Querschnitt aufweisen, in einem radialen Teilschnitt,

Fig. 2　ein Fahrzeugrad mit einer Felge, die am radial inneren Umfang ein Montagehochbett für die Reifenwülste aufweist, in einem radialen Teilschnitt.

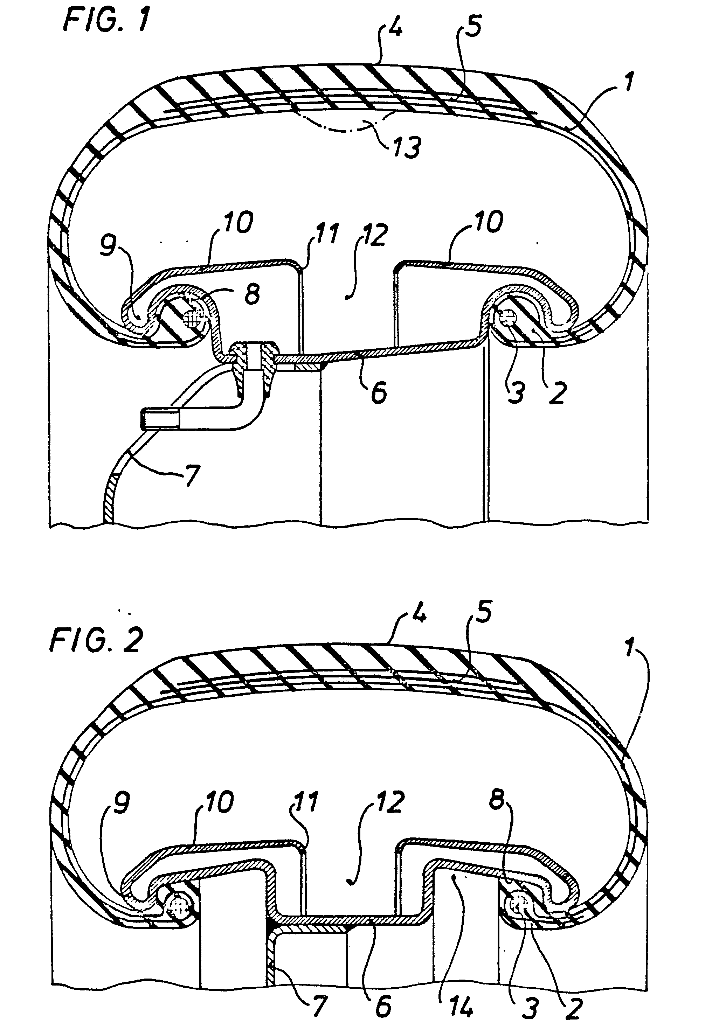

Beim Fahrzeugrad der Fig. 1 weist der im wesentlichen aus Gummi oder gummiähnlichen Kunststoffen bestehende Reifen eine Karkasse 1 auf, die in den Wülsten 2 durch Umschlingen von zug- und druckfesten Wulstkernen 3 verankert ist. Zwischen dem Laufstreifen 4 und der Karkasse 1 kann sich ein üblicher Verstärkungsgürtel 5 befinden.

Die bevorzugt einteilige Felge weist einen im mittleren Bereich etwa zylinderförmig verlaufenden Felgenkranz 6 auf, der in üblicher Weise an einer Felgenschüssel 7 befestigt ist. Seitlich außen geht der Felgenkranz 6 in Felgensitzflächen 8 für die Reifenwülste 2 mit etwa halbkreisförmigem Querschnitt über. Axial außen befinden sich Felgenhörner 9, die durch eine Krümmung der Felgenkranzwandung nach radial außen gebildet werden.

Die Wandung des Felgenkranzes 6 endet nicht bei den Felgenhörnern 9, sondern sie ist nach radial außen gekrümmt fortgesetzt und mit radialem Abstand zum übrigen Felgenkranz nach axial innen zurückgebogen, so daß sie zwei Pannenlaufringe 10 bildet. Die axial inneren Ränder 11 der Pannenringe 10 können nach radial innen zurückgebogen sein. Der axiale Abstand der beiden Ränder 11 ist bevorzugt so gewählt, daß der dazwischenliegende Raum als Tiefbett 12 für eine Reifenmontage dienen kann. Es ist günstig, die Pannenlaufringe 10 so auszubilden, daß ihr Durchmesser nach axial innen hin zunimmt und ihre Wandstärke in dieser Richtung abnimmt. Der gesamte Felgenkranz 6 einschließlich der Pannenlaufringe 10 ist bevorzugt aus Stahlblech gefertigt, und seine Wandstärke beträgt etwa zwei Drittel der Wandstärke üblicher Tiefbettfelgen. Bei Bedarf kann die Felge selbstverständlich auch aus einem anderen Material, z. B. aus Aluminiumblech gefertigt sein.

Bei Durchschlägen z. B. infolge von zu geringem Luftdruck sowie bei einem Pannenlauf, d. h. bei einer Fahrt mit drucklosem Reifen, legt sich der Reifen mit seinem Zenitbereich auf die Notlaufringe 10, die aufgrund ihrer Ausgestaltung in einem gewissen Umfang federnd nachgeben können, woraus eine geringere Beanspruchung des Felgenkranzes 6 und des Reifens resultiert. Bei Bedarf kann es günstig sein, den Reifen auf der Innenseite im mittleren Bereich mit einem umlaufenden oder unterbrochenen Steg 13 zu versehen, der sich bei einem Pannenlauf in das Tiefbett 12 absenkt und dem Reifen damit eine Seitenführung verleiht.

Das Fahrzeugrad der Fig. 2 entspricht im wesentlichen dem der Fig. 1. Der einzige Unterschied besteht darin, daß sich am radial inneren Umfang des Felgenkranzes 6 neben einer jeden Sitzfläche 8 für den Reifenwulst 2 ein Montagehochbett 14 befindet, so daß auch solche Reifen montiert werden können, bei denen die Wulstkerne 3 nicht exzentrisch in den Wülsten 2 gelagert sind.

**Patentansprüche**

1. Felge für einen Fahrzeugluftreifen, der mit seinen Wülsten am radial inneren Umfang der Felge montierbar ist, mit einem Felgenkranz, der radial innen Sitzflächen für die Reifenwülste und an den seitlichen Rändern sich im wesentlichen nach radial innen erstreckende Felgenhörner aufweist, der weiterhin radial außen mit Stützflächen für einen Pannenlauf versehen ist, dadurch gekennzeichnet, daß die Wandung des Felgenkranzes (6) im Bereich eines jeden Felgenhorns (9) nach radial außen gekrümmt fortgesetzt ist und dann mit radialem Abstand zum übrigen Felgenkranz (6) nach axial innen zurückgebogen ist, so daß sie zwei Pannenlaufringe (10) bildet.

2. Felge nach Anspruch 1, dadurch gekennzeichnet, daß die Pannenlaufringe (10) axial innen einen Abstand voneinander aufweisen, der einer üblichen Tiefbettbreite entspricht.

3. Felge nach Anspruch 1, dadurch gekennzeichnet, daß die Wandstärke des Felgenkranzes (6) etwa zwei Drittel der Wandstärke üblicher Tiefbettfelgen entspricht.

4. Felge nach Anspruch 1, dadurch gekennzeichnet, daß die Wandstärke der Pannenlaufringe (10) von axial außen nach innen hin abnimmt.

5. Felge nach Anspruch 1, dadurch gekennzeichnet, daß der Durchmesser der Pannenlaufringe (10) von axial außen nach innen hin zunimmt.

6. Felge nach Anspruch 1, dadurch gekennzeichnet, daß der Felgenkranz (6) aus Stahlblech besteht.

7. Felge nach Anspruch 1, dadurch gekennzeichnet, daß die Felgensitzflächen (8) für die Reifenwülste (2) einen etwa halbkreisförmigen Querschnitt aufweisen.

8. Felge nach Anspruch 1, dadurch gekennzeichnet, daß die Felgensitzflächen (8) für die Reifenwülste (2) im Querschnitt gerade verlaufen, und zwar waagerecht oder leicht geneigt, und daß sich axial innen von den Sitzflächen (8) ein Montageraum (14) für die Reifenmontage befindet.

**Claims**

1. Rim for a pneumatic vehicle tyre which is mountable with its beads on the radially inner circumference of the rim, the rim having a rim ring which is provided radially internally with seating surfaces for the tyre beads and is provided with substantially radially inwardly extending rim flanges at the lateral edges, the rim also being provided radially externally with supporting surfaces for running with a punctured tyre, characterised in that the wall of the rim ring (6) in the region of each rim flange (9) extends in a radially outwardly curved manner and is then bent-back axially inwardly with a radial spacing from the other rim ring (6) so that it forms two flat-running rings (10).

2. Rim according to claim 1, characterised in that the flat-running rings (10) have a spacing between each other axially internally which corresponds to a conventional drop-base width.

3. Rim according to claim 1, characterised in that the wall thickness of the rim ring (6) corresponds to substantially two-thirds of the wall thickness of conventional drop-base rims.

4. Rim according to claim 1, characterised in that the wall thickness of the flat-running rings (10) decreases from axially externally inwardly.

5. Rim according to claim 1, characterised in that the diameter of the flat-running rings (10) increases from axially externally inwardly.

6. Rim according to claim 1, characterised in that the rim ring (6) is formed from sheet steel.

7. Rim according to claim 1, characterised in that the rim seating surfaces (8) for the tyre beads (2) have a substantially semi-circular cross-section.

8. Rim according to claim 1, characterised in that the rim seating surfaces (8) for the tyre beads (2) extend rectilinearly in cross-section, and that is to say in a horizontal or slightly inclined manner, and in that a mounting space (14) for mounting of the tyre is situated axially internally of the seating surfaces (8).

**Revendications**

1. Jante pour un pneumatique de véhicule, qui se monte par ses talons sur la circonférence radialement intérieure de la jante, comprenant une base de jante qui présente des surfaces de repos de talons radialement intérieures destinées à recevoir les talons du pneumatique et, le long des bords latéraux, des rebords de jante s'étendant sensiblement radialement vers l'intérieur, cette jante étant en outre munie, dans une position située radialement à l'extérieur, de surfaces d'appui pour le roulement à plat,
caractérisée en ce que la paroi de la base (6) de la jante est prolongée dans la région de chaque rebord de la jante (9), en s'incurvant radialement vers l'extérieur et qu'elle est ensuite recourbée axialement vers l'intérieur, à une certaine distance radiale du reste de la base (6) de la jante, de sorte qu'elle forme ainsi deux anneaux de roulement à plat (10).

2. Jante selon la revendication 1, caractérisée en ce que les anneaux de roulement à plat (10) présentent, axialement vers l'intérieur, une distance d'écartement mutuel qui correspond à la largeur d'une gorge de jante creuse habituelle.

3. Jante selon la revendication 1, caractérisée en ce que l'épaisseur de paroi de la base (6) de la jante correspond à peu près aux deux tiers de l'épaisseur de paroi des jantes à gorge habituelles.

4. Jante selon la revendication 1, caractérisée en ce que l'épaisseur de paroi des anneaux de roulement à plat (10) décroît de l'extérieur vers l'intérieur dans la direction axiale.

5. Jante selon la revendication 1, caractérisée en ce que le diamètre des anneaux de roulement à plat (10) croît de l'extérieur vers l'intérieur dans la direction axiale.

6. Jante selon la revendication 1, caractérisée en ce que la base (6) de la jante est en tôle d'acier.

7. Jante selon la revendication 1, caractérisée en ce que les surfaces de repos de talons (8) qui reçoivent les talons (2) du pneumatique présentent une section à peu près semi-circulaire.

8. Jante selon la revendication 1, caractérisée en ce que les surfaces de repos de talons (8) qui reçoivent les talons (2) du pneumatique sont d'une forme rectiligne en section, et sont horizontales ou légèrement inclinées et en ce qu'un espace de montage (14) prévu pour le montage du pneumatique se trouve dans une position axialement intérieure par rapport aux surfaces de repos de talons (8).

FIG. 1

FIG. 2

1